# EUROPEAN PATENT SPECIFICATION

(11) **EP 4 001 169 B1**
(45) Date of publication and mention of the grant of the patent: **25.06.2025**
(21) Application number: 21209206.8
(22) Date of filing: 19.11.2021
(51) Int. Cl.: B65D 90/14, B60P 1/64

(54) **CONTAINER STRUCTURE**
BEHÄLTERSTRUKTUR
STRUCTURE DE RÉCIPIENT

(30) Priority: 24.11.2020 FI 20206194
(43) Date of publication of application: 25.05.2022
(73) Proprietor: Pikapaja Oy, 86800 Pyhäsalmi (FI)
(72) Inventor: Kalanen, Leo, 86800 Pyhäsalmi (FI)
(74) Representative: Kolster Oy Ab

(56) References cited:
- WO-A1-01/03971
- WO-A1-94/26630
- JP-A- 2013 071 736
- JP-B2- 5 826 575
- US-A- 3 460 697

## Description

### Field of the invention

The invention relates to a container structure, in particular to a replaceable container structure transportable with a transport vehicle.

### Background of the invention

There are various kinds of support and lifting solutions for containers transportable by a transport vehicle and replaceable when the container is to be removed from a transport vehicle or lifted aboard a transport vehicle. The support and lifting solutions may be integrated into part of the container structure. However, the prior art support and lifting solutions, integrated into a container, are associated with several drawbacks.

US3460697A discloses a transportable load-carrying appliance to be removably received on a transport vehicle and comprising a container, base frame, or other body structure having hydraulic legs which by suitable mounting means are displaceable between a vertical outer operative position and a horizontal inner inoperative position within the vehicle width, using pin groove structures between the legs and hydraulic jacks.

WO01/03971A1 discloses a container handling apparatus utilising a cradle having a chassis adapted specifically for attachment to the top of the shipping container and having lifting legs attached to each corner of the chassis and incorporating lifting rams. The legs are pivotably attached at pivot points to the respective corners whereby to be swung between positions extending alongside the chassis in a stored orientation and positions extending downwardly from the chassis in a ground engaging orientation, using pin groove structures between the legs and hydraulic jacks.

WO94/26630A1 discloses a container pallet comprising a chassis adapted to engagably receive a container unit and two or more lifting arms adapted for independent or co-ordinated movement to effect the controlled movement of a container fitted to said container pallet in any required vertical or horizontal direction, wherein the arms can be swung between positions extending alongside the chassis in a stored orientation and positions extending downwardly from the chassis in a ground engaging orientation, using pin groove structures between the arms and hydraulic jacks.

### Brief description of the invention

It is therefore an object of the invention to develop to container structure with integrated support legs, by means of which the aforementioned drawbacks related to support and lifting solutions may be solved. The object of the invention is achieved with a container structure, characterised by what is stated in the independent claim. The preferred embodiments of the invention are disclosed in the dependent claims.

### Brief description of the drawings

The invention will now be described in more detail in connection with preferred embodiments and with reference to the accompanying drawings, in which:
Figure 1 shows an embodiment of container structure and support legs therein, in which the container is connected to a transport vehicle;
Figures 2 and 3 show some positions of the supports legs in the container structure, in accordance with some embodiments;
Figure 4 shows how the support legs move between different positions according to an embodiment;
Figure 5A shows supporting the container structure to rest on support legs, according to an embodiment;
Figure 5B shows the use of the support legs of the container structure for lowering a container onto a base, according to an embodiment;
Figures 6A to 6C show a ball groove structure used in the support legs, according to an embodiment; and
Figure 7 shows a control system of the support legs, according to an embodiment.

### Detailed description of the invention

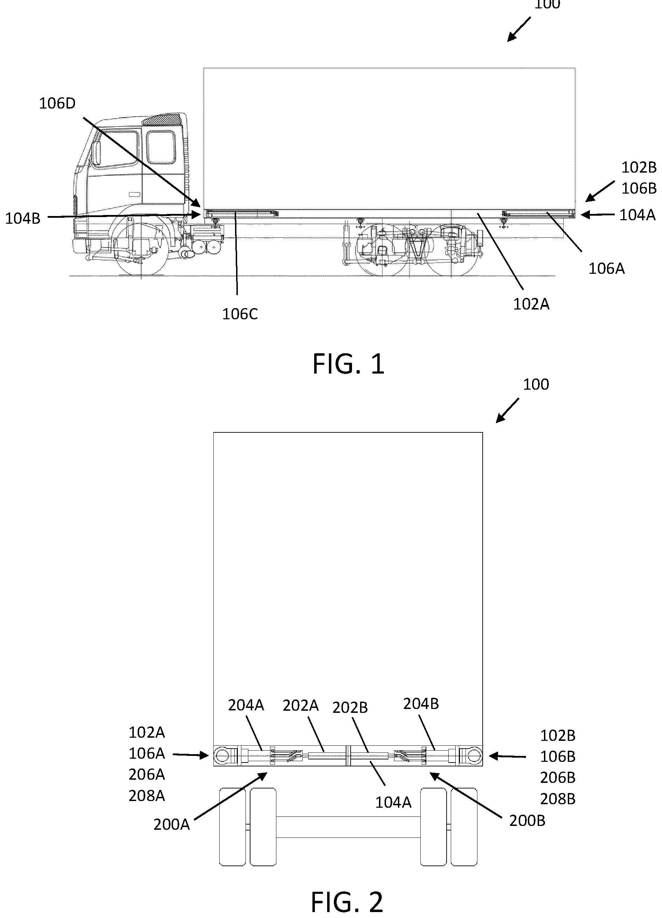

Figure 1 is a partial sectional view of a transport vehicle and a replaceable container structure 100 connected thereto (later on, the term container will also be used). In the situation according to the drawing, the container is supported to rest on the container vehicle. When the container is to be removed from the transport vehicle, the container needs to be raised up and supported with support legs so that the container no longer rests on the support vehicle, at which point the transport vehicle may be driven away from under the container. This means that the container stays supported by the support legs, from where it may be lowered to a base, such as the ground. Similarly, when a container is to be connected to a transport vehicle, the container has to be raised in the air so that the transport vehicle may be driven under the container and lowered aboard the transport vehicle, whereby the container is again supported to the transport vehicle.

Said support legs may be integrated into the container structure and be used for both supporting the container as well as for lifting and lowering. Integrating support legs into the container structure brings about a plurality of challenges, because the outer dimensions of the container must be kept in accordance with the ISO standard, in other words, the integrated support elements must not increase the outer dimensions of the container. In addition, the internal volume of the container should not become reduced due to the support elements.

The inventive solution for container-integrated support legs, on which a container may be supported and by means of which a container may be lifted and lowered aims to remove these drawbacks.

The solution according to the invention comprises a replaceable container structure, transportable with a transport vehicle and comprising a container part and thereunder a body structure with longitudinal body parts and transverse body parts, and the container structure comprising at least four support legs on which the container structure is supportable when the container structure is not supported by a transport vehicle, and the support legs each comprising a support leg body and an adjustment leg hydraulically-movable in relation to the support leg body to adjust the length of the support leg, and that for each support leg the container structure comprises a support and transfer arrangement provided with a hydraulic transfer actuator to support the support leg from the support leg body of the support leg and to change the location of the support leg between a transport position and usage position, and in which usage position the support leg is distanced to a location outside an area defined by the body structure, in which the support and transfer arrangements of the support legs are such that the support and transfer arrangement comprises, between the transfer actuator and support leg body, a ball groove structure which, by means of the hydraulic transfer actuator comprised by the support and transfer arrangement, is arranged when the support leg is moved from the transport position to a location of the usage position both to distance the support leg running in the direction of the longitudinal body part on the outer side of the area defined by the body structure from the body structure of the container structure and in addition to turn the distanced support leg into a vertical position, and similarly the ball groove structure, when the support leg is moved from the distanced location of the usage position to the transport position by means of the hydraulic transfer actuator, is arranged to both turn the support leg from the vertical position and in addition to retract the support leg to the area defined by the body structure into the transport position in the direction of the longitudinal body part on the outer side of the body structure.

With reference to Figure 1, in which a vehicle has, connected thereto, a container structure 100 whose body structure comprises longitudinal body parts 102A-B and transverse body parts 104A-B. In an embodiment, said longitudinal and transverse body parts are structures at the bottom of the container structure. Longitudinal refers to structures in the container's longitudinal axis, and similarly transverse refers to structures in the transverse direction of the container, as shown in Figure 1. In addition, Figure 1 shows four support legs 106A-D positioned substantially close to the bottom corners of the container. In an embodiment, the container structure may comprise more than four support legs. For example, a container may comprise six support legs so that, in addition to the support legs 106A-D shown in Figure 1, there are support legs between the support legs 106A and 106C as well as 106B and 106D, that is, three support legs per side.

The support legs 106A-D in Figure 1 are shown in the transport position where they run on the sides 102A-B of the container structure 100 substantially in the direction of the longitudinal axis of the container, that is, substantially horizontally. In other words, the support legs run in the direction of the longitudinal body part. Running in the direction of the longitudinal body part should be understood in its wide sense in this context. That is, the support legs are not necessarily exactly concurrent with the longitudinal body structures, but are substantially concurrent. This being the case, the support legs may also reside at a particular (small) angle in relation to the longitudinal axis of the container, so the longitudinal axis of the support leg may be at a particular angle in relation to the longitudinal axis of the container. The essential matter here is that the support leg may be positioned without problems in the transport position to the longitudinal body structures of the container without, however, increasing the outer dimensions or reducing the inner dimensions of the container.

Figure 2 shows the container 100 from the rear end, that is, from the direction of the transverse body part 104A. The support legs 106A-B comprise a support leg body 206A-B and an adjustment leg 208A-B movable hydraulically in relation to the support leg body to adjust the length of the support leg. In addition, the container structure 100 comprises a support and transfer arrangement 200A-B provided with a hydraulic transfer actuator 202A-B to support the support leg 106A-B and to move its location between a transport position and a usage position. Said support and transfer arrangement 200A-B comprises, between the hydraulic transfer actuator 202A-B and support leg body 206A-B, a ball groove structure 204A-B which, by means of the hydraulic transfer actuator 202A-B comprised by the support and transfer arrangement 200A-B arranged, when the support leg 106A-B is moved from the transport position to a location of the usage position, is arranged to distance the longitudinal support leg 106A-B substantially running in the direction of the longitudinal body part 102A-B to outside the area defined by the body structure of the container structure, and in addition to turn the distanced support leg 106A-B into a vertical position. Similarly, said ball groove structure 204A-B is arranged, by means of the hydraulic transfer actuator 202A-B, to both turn the support leg 106A-B from the vertical position into a transport position running in the direction of the longitudinal body part 102A-B and in addition to retract the support leg 106A-B to the area defined by the body structure.

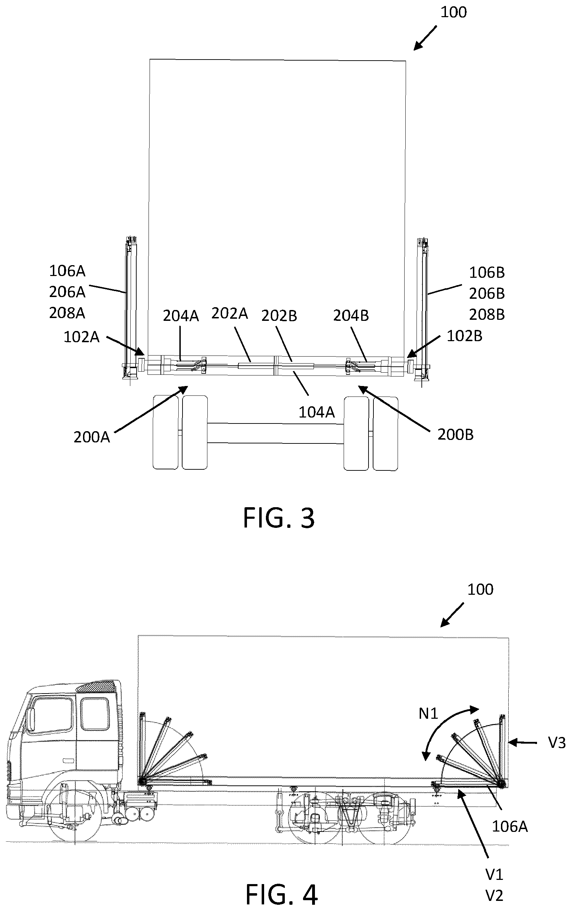

For reasons of clarity, Figure 2 only shows the parts 200A-B, 202A-B, 204A-D, 206A-B and 208A-B at the end (rear end), which are used with the support legs 106A-B. At the end on the side of the transverse body part 104B of the container structure (the end on the transport vehicle side, front end), there are similarly support leg bodies 206C-D, hydraulically movable adjustment legs 208C-D, support and transfer arrangements 200C-D, hydraulic transfer actuators 202C-D, and ball groove structures 204C-D to operate the support legs 106C-D. Therefore the end on the side of said transverse body part 104B corresponds to the structure shown in Figure 2 as concerns the invention. The above also applies to Figure 3 which only shows the parts at the end shown in the drawing. The parts at the end shown in Figure 3 correspond to the parts shown in Figure 2 and their operation.

Correspondingly, Figures 1, 4, 5A, and 5B only show parts on the second side of the container (the side of the longitudinal body part 102A), but the corresponding parts and operation are also on the other side of the container, which cannot be seen in the drawings (the side of the longitudinal body part 102B).

In Figures 1 and 2, the support legs 106A-D are in the transport position whereby the support legs do not extend beyond the area defined by the container structure on its sides 102A-B or ends 104A-B. Consequently, the container structure with its support legs is in accordance with the ISO standard in terms of its outer dimensions. In said transport position, the support legs 106A-D comprising the support leg bodies 206A-D and adjustment legs 208A-D are substantially adapted in the longitudinal body parts 102A-D of the body structure of the container 100. Similarly, the support and transfer arrangement 200A-D comprising the hydraulic transfer actuator 202A-D and ball groove structure 204A-D is adapted in the transverse body parts 104A-B of the body structure of the container 100. Therefore, the parts referred to in the above are in the bottom part of the container structure when they are in the transport position. The arrangement described in the above, where the parts are positioned in the body structures of the bottom part of the container, allows the inner space of the container not to be reduced due to the support legs or the parts needed to operate them.

With reference to Figures 1 to 4, the lifting and supporting a container to rest on said support legs 106A-D comprises the following steps: When the container 100 is connected and supported to a transport vehicle, the support legs 106A-D are in the transport position whereby they do not extend beyond the area defined by the body structure of the container, as shown in Figures 1 and 2, for example. When the container is to be moved off the transport vehicle to rest on the support legs, the support legs distance themselves from the container structure by first moving away (in the width direction of the container) from the longitudinal body parts 102A-B to which said support legs are adapted in the transport position. In other words, the support legs 106A-C distance themselves from the longitudinal body part 102A, and correspondingly the support legs 106C-D distance themselves from the longitudinal body part 102B. At the first stage of the distancing movement, the support legs run substantially in the direction of the longitudinal body structure, that is, substantially horizontal. Once the support legs have been distanced far enough from the container structure, the support legs are turned into a vertical position, whereby the support leg is substantially at a 90 degree angle in relation to the longitudinal body parts. Far enough refers to there being no danger of the support leg being turned hitting the body structures of the container during turning. The turning motion may also be commenced at the final stage of the distancing movement. This means that the support leg may still be distancing itself from the container structure at the time its turning to the vertical position has already begun.

Figure 3 describes a step where the distancing movement of the support legs 106A-B is complete, and the support legs 106A-B have been turned vertically. Figure 3 is a view from the same end as in Figure 2, so of the rear part of the container structure, with the drawing only showing the support legs 106A-B at that particular end, as well as the parts 200A-B, 202A-B, 204A-B, 206A-B and 208A-B they comprise. As mentioned in the above, the corresponding parts with their functions also reside at the opposite end.

Figure 4, too, describes the aforementioned step, where the distancing movement of the support leg 106A is complete and the support leg 106A has been turned vertically. Figure 4 describes the steps of turning the support leg. In the first step V1, the support leg is in the transport position, in the second step V2 the support leg has been distanced far enough from the body structure so that the turning of the support leg vertically may begin. In the third step V3, the support leg has been turned in the vertical position. The figure also shows the intermediate steps between steps V2 and V3, where the support leg moves in the direction of the arrow N1 between steps V2 and V3. The same operation also applies to the other support legs 106B-C in the container structure.

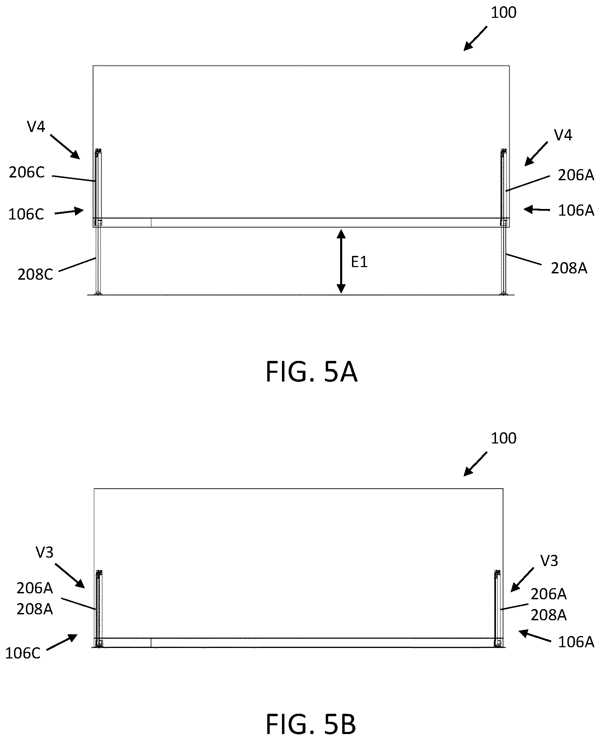

Figures 5A-B show a side view of the container structure 100 (the side on the longitudinal body part 102A of the body structure). Figure 5A shows step V4, in which the container structure 100 is supported on the support legs. Adjustment bodies 208A-D of the vertically-turned support legs 106A-D are hydraulically moved out of the body 206A-D of the support legs, so that the second end of the adjustment bodies is against a base, such as the ground, resulting in that the container is raised off the transport vehicle. In such a case, the distance E1 between the container bottom part from the base is such that the transport vehicle may be driven away from below the container, and the container structure is left supported by the support legs 106A-D. The transport vehicle is not shown in Figures 5A-B. Said distance E1 may be adjustable so that it is optimal for vehicles of different kinds. In other words, the support legs allow the container to be lifted at different heights.

Figure 5B shows step V3, where the adjustment bodies 208A-D of the support legs have been moved back inside the body 206A-D of the support legs, whereby the container descends against the base. So, at this point the support legs are in the same step V3, as shown in Figures 3 and 4, but in the situation shown in Figure 5B the container is against the base, but not supported to the transport vehicle.

In an embodiment, said support legs may be moved back to the transport position while the container is against a base.

When a container is to be lifted aboard a transport vehicle, the steps described in the above are carried out in the opposite order. To begin with, the container is against a base as shown in Figure 5B. Next, the container is raised into the air from the base with the help of the adjustment bodies of the support legs, whereby there is a specific distance E1 between the container and base, allowing a transport vehicle to be driven under the container as shown in Figure 5A. When the vehicle is under the container, the container may be lowered aboard the transport vehicle by means of the support legs, as shown in Figure 3, where the support legs have been retracted inside the body part but the support legs are still outside the area defined by the body parts of the body structure. After this, the support legs are turned back from the substantially vertical position to the substantially horizontal position, and retracted to the transport position whereby the support legs and the associated parts are within the area defined by the body structure as shown in Figure 2, for example.

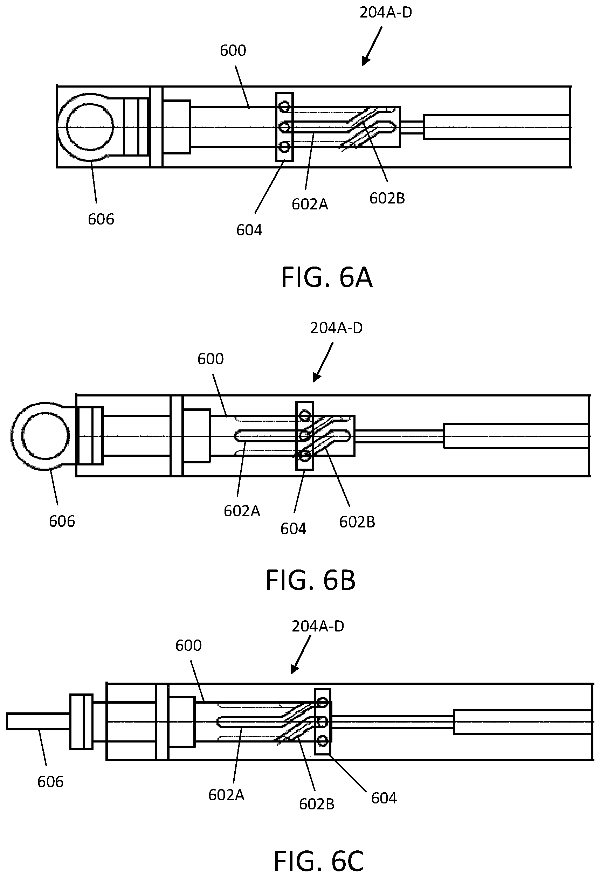

With reference to Figure 6A-C, the ball-groove structures 204A-D are such that each ball-groove structure 204A-D comprises a motion shaft 600 provided with a groove structure 602A-B and a ball structure 604, inserted in the groove structure 602A-B of the motion shaft, and that the groove structure 602A-B of the motion shaft comprises a substantially straight groove section 602A and a rotating groove section 602B as an extension to it, so that the straight groove section 602A is for distancing the support leg from the body structure and for retracting it to the body structure, and that the rotating groove section 602B is for turning the distanced support leg from the horizontal to vertical position and back from the vertical to horizontal position. The ball groove structure 204A-D is in a state shown in Figure 6A when the support leg 106A-D is in the transport position A1, and the support leg and its mounting element 606 are within the area defined by the body structure. Figure 6B shows a state of the ball groove structure 204A-D in which the ball structure 604 has moved to the second end of the straight groove section 602A, and the support leg and its mounting element have moved outside the body structure. After this, the rotating groove section 602B in the ball structure 204A-D together with the ball structure 604 begin the turning of the mounting element 606 of the support leg so that the support leg turns from the substantially horizontal position into a substantially vertical position. Figure 6C shows a state of the ball groove 204A-D where the ball structure 604 has moved to the end of the rotating section 602B of the groove, that is, the opposite end to that shown in Figure 6A. In this case, the support legs has been distanced from the body structure and turned vertically, whereby the adjustment leg may be moved out of the body part of the support leg.

The support and transfer arrangements of the support legs are such that the ball groove structure and hydraulic transfer actuator comprised by each support and transfer arrangement are in connection with the transverse body part comprised by the body structure. With reference to Figure 2, the ball groove structure 204A-B and hydraulic transfer actuator 202A-B are adapted in connection with the transverse body part 104A residing in the body structure. There is the same arrangement at the second end of the container structure, where the ball groove structure 204C-D and hydraulic transfer actuator 202C-D are adapted in connection with the transverse body part 104B residing in the body structure. The ball groove structure is adapted into the transverse body parts so that its movement (longitudinally and by rotating) is possible in the manner described in the above.

With reference to Figures 2 and 6A-C,the ball groove structure 204A-D and hydraulic transfer actuator 202A-D are in connection with the transverse body part 104A-B, as described in the above, and they are additionally adapted to be in parallel successively in relation to each other, and also parallel to the transverse body part 104A-B. In other words, the longitudinal axes of the ball groove structure, hydraulic transfer actuator and/or transverse body part are substantially concurrent, and said ball groove structure and hydraulic transfer actuator are one after the other.

In an embodiment, the transverse body part 104A-B of the body structure, in connection with which the ball groove structure 204A-D and hydraulic transfer actuator 202A-D are, is a transverse end beam in the body structure of the container.

The ball groove structure 204A-D and hydraulic transfer actuator 202A-D comprised by said support and transfer arrangement 200A-D are adapted substantially inside the transverse body part of the body structure. In an embodiment, said transverse body part is a tubular, cross-sectionally closed structure which is open or openable at the ends, and inside which the support and transfer arrangements may be placed. In a second embodiment, said transverse body part is cross-sectionally open, such as a C profile, inside which the support and transfer arrangements may be placed.

The ball groove structures 204A-D and hydraulic transfer actuators 202A-D comprised by the support and transfer arrangements 200A-D of two different support legs 106A-D are in connection with the same transverse body part 104A-B of the body structure. With reference to Figure 2, in which an embodiment is described where the ball groove structures 204A-B and hydraulic transfer actuator 202A-B comprised by the transfer arrangement 200A-B of two support legs 106A-B are adapted in the same transverse body part 104A.

With reference to Figure 2, the ball groove structures 204A-B and hydraulic transfer actuators 202A-B comprised by the support and transfer arrangements 200A-B of two different support legs 106A-B run in the direction of the transverse body part 104A. In other words, the longitudinal axes of the ball groove structures, hydraulic transfer actuators and/or transverse body part are substantially concurrent.

With reference to Figure 2, in an embodiment, the transverse body part 104A of the body structure, in connection with which the ball groove structures 204A-B and hydraulic transfer actuators 202A-B comprised by the support and transfer arrangements 200A-B of two different support legs are, is a transverse end beam of the body structure.

With reference to Figure 2, the ball groove structure 204A-B and hydraulic transfer actuators 202A-B comprised by the support and transfer arrangement 200A-B of two support legs 106A-B are adapted substantially inside the transverse body part of the body structure. As described in the above, said body structure may be closed or open in cross section, inside which said support and transfer arrangements may be placed.

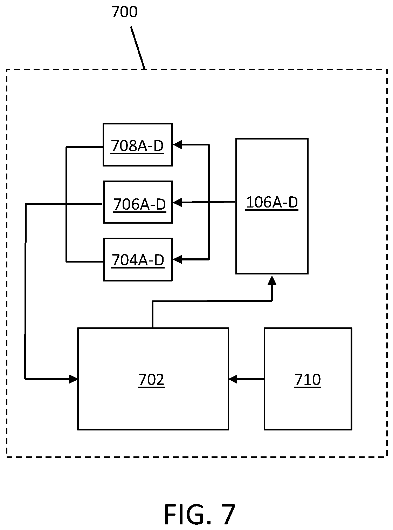

Figure 7 shows an embodiment in which the container structure comprises a control system 700 for controlling the support legs 106A-D and the associated parts. In an embodiment, the control system 700 of the container structure comprises a control unit 702 arranged to control the length of each hydraulically adjustable support leg 106A-D, and also arranged to control the hydraulic transfer actuator 202A-D comprised by the support and transfer arrangement 200A-D of each support leg 106A-D.

With reference to Figure 7, in an embodiment there is a position sensor 704A-D for each support leg 106A-D, adapted to identify that the movement distancing the support leg 106A-D outside the body structure is complete, and that each position sensor 704A-D is in connection with the control unit 702 so that the information provided by each position sensor 704A-D on the completion of the distancing movement is arranged to allow the control unit 704A-D to issue a control command to start the turning movement of each support leg 106A-D.

Further referring to Figure 7, in an embodiment there is a position sensor 706A-D for each support leg 106A-D to identify that turning movement of the support leg 106A-D into the vertical position is complete, and that each position sensor 706A-D is in connection with the control unit 702 so that the information provided by each position sensor 706A-D on the completion of the turning movement is arranged to allow the control unit 702 to issue a control command to start the lengthening of each support leg 106A-D in order to make the hydraulically-movable adjustment leg of each support leg 106A-D rest against a support surface, such as the ground surface or another support surface.

Further with reference to Figure 7, in an embodiment there is a position sensor 708A-D for each support leg 106A-D to identify that the support leg 106A-D has been retracted inside the area defined by the body structure into the transport position in the direction of the longitudinal body part on the outer side of the body structure.

The control system 700 may further comprise a power source 710 for the control unit 702. In an embodiment, the power source comprises one or more solar panels. In a second embodiment, the power source comprises one or more batteries. The power source may also be a combination of one or more solar panels and batteries. In an embodiment the power source may be external to the system, whereby the system may be hooked up to an electrical network, for example. In an embodiment the power source may be a transport vehicle, whereby the vehicle supplies the operating voltage to the system. In such a case, said battery may be switched off.

The following example describes how the container structure according to the invention and the support legs therein may be utilised in practice. The container is connected to the transport vehicle during transport. When the container is to be removed from the vehicle, a command is given through the control unit, by means of which the support legs positioned in the vicinity of the bottom corners of the container are transferred from inside the area defined by the body structure of the container to outside the area defined by the body structure by means of the support and transfer devices of the support leg. During transport, the support legs are at the bottom part of the container structure substantially in the direction of the longitudinal body parts of the container's body structure. Similarly, the support and transfer devices of the support leg are placed in the transverse body parts of the container's bottom part. When the support legs are transferred outside the area defined by the body structure of the container, the support leg first distances itself in the horizontal direction, and when the leg has distanced itself sufficiently, the support leg starts to turn from the horizontal position into vertical. When the movement distancing and turning the support leg is complete, the adjustment leg inside the support leg body moves out of the body part. The second end of the adjustment legs settles against a base and lifts the container up from the transport vehicle whereby the container is resting on the support legs, and the transport vehicle may be driven out from below the container. Once the vehicle has been drive out from below the container, the container may be lowered against a base by means of the support legs. Similarly, when the container is to be lifted aboard the transport vehicle, the steps described in the above are carried out in the opposite order. The operations described in the above may be monitored by means of the position sensors in connection with the control unit.

The solution according to the invention solves many drawbacks of the prior art. The support legs with their actuators integrated into the body structures of the bottom part of the container structure do not increase the outer dimensions of the container or reduce the inner space of the container. Consequently the invention provides an effective solution differing from prior art, integrated into the container structure for lifting and supporting containers.

Those skilled in the art will find it obvious that, as technology advances, the basic idea of the invention may be implemented in many different ways. The invention and its embodiments are thus not restricted to the above-described examples but may vary within the scope of the claims.

## Claims

1. A replaceable and transportable, with a transport vehicle, container structure comprising a container part and thereunder a body structure with longitudinal body parts (102A-B) and transverse body parts (104A-B), and the container structure comprising at least four support legs (106A-D) on which the container structure is supportable when the container structure is not supported by a transport vehicle, and the support legs (106A-D) each comprising a support leg body (206A-D) and an adjustment leg (208A-D) hydraulically-movable in relation to the support leg body to adjust the length of the support leg, and for each support leg (106A-D) the container structure comprises a support and transfer arrangement (200A-D) provided with a hydraulic transfer actuator (202A-D) to support the support leg from the support leg body (206A-D) and to change the location of the support leg between a transport position and usage position, and in which in the usage position the support leg (106A-D) is distanced to a position outside an area defined by the body structure, and
wherein the support and transfer arrangements of the support legs (106A-D) are such that each support and transfer arrangement (200A-D) comprises, between the hydraulic transfer actuator (202A-D) and the support leg body (206A-D), a ball groove structure (204A-D) which, by means of the hydraulic transfer actuator (202A-D) comprised by the support and transfer arrangement (200A-D), is arranged, when the support leg is moved from the transport position to a location of the usage position, both to distance the support leg (106A-D), running in the direction of the longitudinal body part (102A-B) on the outer side of the area defined by the body structure, from the body structure of the container structure and in addition to turn the distanced support leg (106A-106D) from a horizontal position to a vertical position, and the ball groove structure (204A-D), when the support leg (106A-D) is moved from the distanced location of the usage position to the transport position by means of the hydraulic transfer actuator (202A-D), is arranged to both turn the support leg (106A-106D) from the vertical position to the horizontal position and in addition to retract the support leg to the area defined by the body structure into the transport position in the direction of the longitudinal body part (102A-B) on the outer side of the body structure,
wherein the support and transfer arrangements (200A-D) of the support legs (106A-D) are such that the ball groove structure (204A-D) and hydraulic transfer actuator (202A-D) comprised by each support and transfer arrangement (200A-D) are inside the transverse body parts (104A-B) such that each transverse body part (104A-B) comprises two ball groove structures (204A-D) and hydraulic transfer actuators (202A-D) arranged successively parallel to each other, and also parallel to the transverse body part (104A-B) wherein longitudinal axes of the ball groove structures, the hydraulic transfer actuators and/or the transverse body part are substantially concurrent,
wherein each ball-groove structure (204A-D) comprises a motion shaft (600) provided with a groove structure (602A-B) having a straight groove section (602A) and a rotating groove section (602B) as an extension from the straight groove section (602A), and a ball structure (604) inserted in the groove structure (602A-B) of the motion shaft, wherein the straight groove section (602A) is configured, with the ball structure (604), to distance and retract the support leg and the rotating groove section (602B) is configured, with the ball structure (604), to turn the distanced support leg between the vertical and the horizontal positions.

2. A container structure as claimed in claim 1, **characterised in that** each transverse body part (104A-B) of the body structure, inside which the ball groove structures (204A-D) and hydraulic transfer actuators (202A-D) are, is a transverse end beam of the body structure.

3. A container structure as claimed in any of the preceding claims, **characterised in that** the container structure comprises a control unit (702) arranged to control the length of each hydraulically adjustable support leg (106A-D), and also arranged to control the hydraulic transfer actuator (202A-D) comprised by the support and transfer arrangement (200A-D) of each support leg (106A-D).

4. A container structure as claimed in claim 3, **characterised in that** there is a position sensor (704A-D) for each support leg (106A-D) to identify that the movement distancing the support leg (106A-D) outside the area defined by the body structure of the container is complete, and that each position sensor (704A-D) is in connection with the control unit (702) so that the information provided by each position sensor on the completion of the distancing movement is arranged to allow the control unit (702) to issue a control command to start the turning movement of each support leg (106A-D).

5. A container structure as claimed in claim 3 or 4, **characterised in that** there is a position sensor (706A-D) for each support leg (106A-D) to identify that the turning movement of the support leg (106A-D) into the vertical position is complete, and that each position sensor (706A-D) is in connection with the control unit (702) so that the information provided by each position sensor (706A-D) on the completion of the turning movement is arranged to allow the control unit (702) to issue a control command to start the lengthening of each support leg (106A-D) in order to make the hydraulically-movable adjustment leg (208A-D) of each support leg (106A-D) rest against a support surface, such as the ground surface or another support surface.

6. A container structure as claimed in claims 3 to 5, **characterised in that** there is a position sensor (708A-D) for each support leg (106A-D) to identify that the support leg (106A-D) has been retracted to the area defined by the body structure of the container into the transport position in the direction of the longitudinal body parts (102A-B) on the outer side of the body structure.

## Patentansprüche

1. Austauschbare und mit einem Transportfahrzeug transportierbare Behälterstruktur, die einen Behälterteil und darunter eine Körperstruktur mit Längskörperteilen (102A-B) und Querkörperteilen (104A-B) umfasst, und die Behälterstruktur mindestens vier Tragbeine (106A-D) umfasst, auf denen die Behälterstruktur tragbar ist, wenn die Behälterstruktur nicht von einem Transportfahrzeug getragen wird, und die Tragbeine (106A-D) jeweils einen Tragbeinkörper (206A-D) und ein Verstellungsbein (208A-D) umfassen, das in Bezug auf den Tragbeinkörper hydraulisch beweglich ist, um die Länge des Tragbeins zu verstellen, und für jedes Tragbein (106A-D) die Behälterstruktur eine Trag- und Überführungseinrichtung (200A-D) umfasst, die mit einem hydraulischen Überführungsbetätigungsorgan (202A-D) zum Tragen des Tragbeins von dem Tragbeinkörper (206A-D) und zum Ändern des Orts des Tragbeins zwischen einer Transportposition und einer Verwendungsposition versehen ist, und wobei in der Verwendungsposition das Tragbein (106A-D) zu einer Position außerhalb eines Bereichs beabstandet ist, der von der Körperstruktur definiert ist, und
wobei die Trag- und Überführungsanordnungen der Tragbeine (106A-D) derart sind, dass jede Trag- und Überführungsanordnung (200A-D) zwischen dem hydraulischen Überführungsbetätigungsorgan (202A-D) und dem Tragbeinkörper (206A-D) eine Kugelrillenstruktur (204A-D) umfasst, die mittels des hydraulischen Überführungsbetätigungsorgans (202A-D), das in der Trag- und Überführungsanordnung (200A-D) enthalten ist, dazu eingerichtet ist, wenn das Tragbein von der Transportposition zu einem Ort der Verwendungsposition bewegt wird, sowohl das Tragbein (106A-D), das in der Richtung des Längskörperteils (102A-B) auf der Außenseite des Bereichs, der von der Körperstruktur definiert ist, von der Körperstruktur der Behälterstruktur verläuft, zu beabstanden als auch zusätzlich das beabstandete Tragbein (106A - 106D) von einer horizontalen Position zu einer vertikalen Position zu drehen, und die Kugelrillenstruktur (204A-D) dazu eingerichtet ist, wenn das Tragbein (106A-D) mittels des hydraulischen Überführungsbetätigungsorgans (202A-D) von dem beabstandeten Ort der Verwendungsposition zur Transportposition bewegt wird, sowohl das Tragbein (106A - 106D) von der vertikalen Position zur horizontalen Position zu drehen als auch zusätzlich das Tragbein zum Bereich, der von der Körperstruktur definiert ist, in die Transportposition in der Richtung des Längskörperteils (102A-B) auf der Außenseite der Körperstruktur einzufahren,
wobei die Trag- und Überführungsanordnungen (200A-D) der Tragbeine (106A-D) derart sind, dass die Kugelrillenstruktur (204A-D) und das hydraulische Überführungsbetätigungsorgan (202A-D), die in jeder Trag- und Überführungsanordnung (200A-D) enthalten sind, sich derart innerhalb der Querkörperteile (104AB) befinden, dass jedes Querkörperteil (104A-B) zwei Kugelrillenstrukturen (204A-D) und hydraulische Überführungsbetätigungsorgane (202A-D) umfasst, die aufeinanderfolgend parallel zueinander und auch parallel zum Querkörperteil (104A-B) eingerichtet sind, wobei Längsachsen der Kugelrillenstrukturen, die hydraulischen Überführungsbetätigungsorgane und/oder der Querkörperteil im Wesentlichen gleichlaufend sind,
wobei jede Kugelrillenstruktur (204A-D) eine Antriebswelle (600), die mit einer Rillenstruktur (602A-B) versehen ist, die einen geraden Rillenabschnitt (602A) und einen umlaufenden Rillenabschnitt (602B) als eine Erweiterung von dem geraden Rillenabschnitt (602A) aufweist, und eine Kugelstruktur (604) umfasst, die in die Rillenstruktur (602A-B) der Antriebswelle eingesetzt ist, wobei der gerade Rillenabschnitt (602A) dazu ausgestaltet ist, mit der Kugelstruktur (604) das Tragbein zu beabstanden und einzufahren, und der umlaufende Rillenabschnitt (602B) dazu ausgestaltet ist, mit der Kugelstruktur (604) das beabstandete Tragbein zwischen der vertikalen und der horizontalen Position zu drehen.

2. Behälterstruktur nach Anspruch 1, **dadurch gekennzeichnet, dass** jeder Querkörperteil (104A-B) der Körperstruktur, in dessen Inneren die Kugelrillenstrukturen (204A-D) und hydraulischen Überführungsbetätigungsorgane (202A-D) sich befinden, ein Querendträger der Körperstruktur ist.

3. Behälterstruktur nach einem der vorhergehenden Ansprüche, **dadurch gekennzeichnet, dass** die Behälterstruktur eine Steuereinheit (702) umfasst, die eingerichtet ist, um die Länge jedes hydraulisch verstellbaren Tragbeins (106A-D) zu steuern, und auch eingerichtet ist, um das hydraulische Überführungsbetätigungsorgan (202A-D) zu steuern, das in der Trag- und Überführungsanordnung (200A-D) jedes Tragbeins (106A-D) enthalten ist.

4. Behälterstruktur nach Anspruch 3, **dadurch gekennzeichnet, dass** ein Positionssensor (704A-D) für jedes Tragbein (106A-D) vorhanden ist, um zu identifizieren, dass die Bewegung, die das Tragbein (106A-D) außerhalb des Bereichs beabstandet, der von der Körperstruktur des Behälters definiert ist, abgeschlossen ist, und dass jeder Positionssensor (704A-D) derart mit der Steuereinheit (702) in Verbindung steht, dass die Informationen, die von jedem Positionssensor über den Abschluss der Beabstandungsbewegung bereitgestellt werden, eingerichtet sind, um es der Steuereinheit (702) zu erlauben, einen Steuerbefehl zum Beginnen der Drehbewegung jedes Tragbeins (106A-D) auszugeben.

5. Behälterstruktur nach Anspruch 3 oder 4, **dadurch gekennzeichnet, dass** ein Positionssensor (706A-D) für jedes Tragbein (106A-D) vorhanden ist, um zu identifizieren, dass die Drehbewegung des Tragbeins (106A-D) in die vertikale Position abgeschlossen ist, und dass jeder Positionssensor (706A-D) derart mit der Steuereinheit (702) in Verbindung steht, dass die Informationen, die von jedem Positionssensor (706A-D) über den Abschluss der Drehbewegung bereitgestellt werden, eingerichtet sind, um es der Steuereinheit (702) zu erlauben, einen Steuerbefehl zum Beginnen des Verlängerns jedes Tragbeins (106A-D) auszugeben, um zu bewirken, dass das hydraulisch bewegliche Verstellungsbein (208A-D) jedes Tragbeins (106A-D) gegen eine Tragoberfläche, wie beispielsweise die Bodenoberfläche oder eine andere Tragoberfläche, anliegt.

6. Behälterstruktur nach Anspruch 3 bis 5, **dadurch gekennzeichnet, dass** ein Positionssensor (708A-D) für jedes Tragbein (106A-D) vorhanden ist, um zu identifizieren, dass das Tragbein (106A-D) zum Bereich, der von der Körperstruktur des Behälters definiert ist, in die Transportposition in der Richtung der Längskörperteile (102A-B) auf der Außenseite der Körperstruktur eingezogen wurde.

## Revendications

1. Structure de conteneur remplaçable et transportable avec un véhicule de transport, comprenant une partie de conteneur et au-dessous de cette dernière, une structure de corps avec des parties de corps longitudinales (102A-B) et des parties de corps transversales (104A-B), et la structure de conteneur comprend au moins quatre jambes de support (106A-D) sur lesquelles la structure de conteneur peut être supportée, lorsque la structure de conteneur n'est pas supportée par un véhicule de transport, et les jambes de support (106A-D) comprenant chacune un corps de jambe de support (206A-D) et une jambe de réglage (208A-D) mobile par voie hydraulique par rapport au corps de jambe de support afin de régler la longueur de la jambe de support, et pour chaque jambe de support (106AD), la structure de conteneur comprend un agencement de support et de transfert (200A-D) prévu avec un actionneur de transfert hydraulique (202A-D) pour supporter la jambe de support à partir du corps de jambe de support (206A-D) et pour modifier l'emplacement de la jambe de support entre une position de transport et une position d'usage, et dans laquelle, dans la position d'usage, la jambe de support (106A-D) est éloignée par rapport à une position à l'extérieur d'une zone définie par la structure de corps, et
dans laquelle les agencements de support et de transfert des jambes de support (106A-D) sont tels que chaque agencement de support et de transfert (200A-D) comprend, entre l'actionneur de transfert hydraulique (202A-D) et le corps de jambe de support (206A-D), une structure de rainure de bille (204A-D) qui, au moyen de l'actionneur de transfert hydraulique (202A-D) constitué par l'agencement de support et de transfert (200A-D), est agencée, lorsque la jambe de support est déplacée de la position de transport à un emplacement de la position d'usage, à la fois pour éloigner la jambe de support (106A-D), s'étendant dans la direction de la partie de corps longitudinale (102A-B) sur le côté externe de la zone définie par la structure de corps, de la structure de corps de la structure de conteneur et en plus, pour faire tourner la jambe de support (106A-106D) éloignée d'une position horizontale à une position verticale, et la structure de rainure de bille (204A-D), lorsque la jambe de support (106A-D) est déplacée de l'emplacement éloigné de la position d'usage à la position de transport au moyen de l'actionneur de transfert hydraulique (202A-D), est agencée à la fois pour faire tourner la jambe de support (106A-106D) de la position verticale à la position horizontale, et en plus pour rétracter la jambe de support par rapport à la zone définie par la structure de corps dans la position de transport dans la direction de la partie de corps longitudinale (102A-B) sur le côté externe de la structure de corps,
dans laquelle les agencements de support et de transfert (200A-D) des jambes de support (106A-D) sont tels que la structure de rainure de bille (204A-D) et l'actionneur de transfert hydraulique (202A-D) constitués par chaque agencement de support et de transfert (200A-D) sont à l'intérieur des parties de corps transversales (104A-B), de sorte que chaque partie de corps transversale (104A-B) comprend deux structures de rainure de bille (204A-D) et les actionneurs de transfert hydrauliques (202A-D) agencés successivement parallèles entre eux, et également parallèles à la partie de corps transversale (104A-B), dans laquelle les axes longitudinaux des structures de rainure de bille, les actionneurs de transfert hydrauliques et/ou la partie de corps transversale sont sensiblement concomitants,
dans laquelle chaque structure de rainure de bille (204AD) comprend un arbre de mouvement (600) prévu avec une structure de rainure (602A-B) ayant une section de rainure droite (602A) et une section de rainure rotative (602B) en tant qu'extension à partir de la section de rainure droite (602A) et une structure de bille (604) insérée dans la structure de rainure (602A-B) de l'arbre de mouvement, dans laquelle la section de rainure droite (602A) est configurée, avec la structure de bille (604), pour éloigner et rétracter la jambe de support et la section de rainure rotative (602B) est configurée, avec la structure de bille (604), pour faire tourner la jambe de support éloignée entre les positions verticale et horizontale.

2. Structure de conteneur selon la revendication 1, **caractérisée en ce que** chaque partie de corps transversale (104A-B) de la structure de corps, à l'intérieur de laquelle sont les structures de rainure de bille (204A-D) et les actionneurs de transfert hydrauliques (202A-D), est une poutre d'extrémité transversale de la structure de corps.

3. Structure de conteneur selon l'une quelconque des revendications précédentes, **caractérisée en ce que** la structure de conteneur comprend une unité de contrôle (702) agencée pour contrôler la longueur de chaque jambe de support réglable par voie hydraulique (106A-D), et également agencée pour contrôler l'actionneur de transfert hydraulique (202A-D) constitué par l'agencement de support et de transfert (200A-D) de chaque jambe de support (106A-D).

4. Structure de conteneur selon la revendication 3, **caractérisée en ce qu'**il y a un capteur de position (704A-D) pour chaque jambe de support (106A-D) afin d'identifier que le mouvement éloignant la jambe de support (106A-D) hors de la zone définie par la structure de corps du conteneur est terminé, et que chaque capteur de position (704A-D) est en connexion avec l'unité de contrôle (702) de sorte que l'information fournie par chaque capteur de position concernant l'achèvement du mouvement d'éloignement est agencée pour permettre à l'unité de contrôle (702) d'émettre une commande de contrôle afin de démarrer le mouvement de rotation de chaque jambe de support (106A-D).

5. Structure de conteneur selon la revendication 3 ou 4, **caractérisée en ce qu'**il y a un capteur de position (706A-D) pour chaque jambe de support (106A-D) afin d'identifier que le mouvement de rotation de la jambe de support (106A-D) dans la position verticale est terminé et que chaque capteur de position (706A-D) est en connexion avec l'unité de contrôle (702) de sorte que l'information fournie par chaque capteur de position (706A-D) concernant l'achèvement du mouvement de rotation est agencée pour permettre à l'unité de contrôle (702) d'émettre une commande de contrôle afin de démarrer l'allongement de chaque jambe de support (106A-D) pour permettre à la jambe de réglage mobile par voie hydraulique (208A-D) de chaque jambe de support (106A-D) de s'appuyer contre une surface de support, comme la surface du sol ou une autre surface de support.

6. Structure de conteneur selon les revendications 3 à 5, **caractérisée en ce qu'**il y a un capteur de position (708A-D) pour chaque jambe de support (106A-D) afin d'identifier que la jambe de support (106A-D) a été rétractée par rapport à la zone définie par la structure de corps du conteneur dans la position de transport dans la direction des parties de corps longitudinales (102A-B) sur le côté externe de la structure de corps.
